(19)

Europäisches
Patentamt

European
Patent Office

Office européen
des brevets

(11) **EP 2 239 947 A1**

(12) **EUROPEAN PATENT APPLICATION**

(43) Date of publication:
    **13.10.2010 Bulletin 2010/41**

(51) Int Cl.:
    *H04N 7/24* (2006.01)     *H04N 7/58* (2006.01)
    *H04N 7/26* (2006.01)

(21) Application number: **09305287.6**

(22) Date of filing: **06.04.2009**

(84) Designated Contracting States:
    **AT BE BG CH CY CZ DE DK EE ES FI FR GB GR HR HU IE IS IT LI LT LU LV MC MK MT NL NO PL PT RO SE SI SK TR**

(71) Applicant: **Alcatel Lucent**
    **75008 Paris (FR)**

(72) Inventors:
    • **Changuel, Nesrine**
      **75015, Paris (FR)**

    • **Sayadi, Bessem**
      **92330, Sceaux (FR)**
    • **Kieffer, Michel**
      **92340, Bourg-la-reine (FR)**

(74) Representative: **Camus, Olivier Jean-Claude**
    **Cabinet Camus Lebkiri**
    **10 rue de la Pépinière**
    **75008 Paris (FR)**

(54)    **Method for allocating bit rates to video programs transmitted within a fixed rate channel**

(57)    The invention relates to a method for allocating bit rates to video programs ($14_1$, $14_2$, ...$14_N$) broadcasted as groups of pictures through a transmission channel (19) having a constant transmission rate, each video program (14i) being encoded through at least one encoding parameter depending on a first smoothness measure representative of quality variations between pictures currently and/ previously transmitted within said video program (14i), **characterized in that** the encoding parameter also depends on:

- A second smoothness measure representative of quality variations between future pictures to be transmitted thereafter in the same video program, and

- At least one quality standard ensuring an encoding quality for any broadcasted video program, transmitted through the channel (19), above a determined absolute and/or relative quality threshold.

Figure 1

**Description**

The invention relates to a method for allocating bit rates to video programs transmitted within a fixed rate channel.

A transmission channel in a telecommunication system might broadcast simultaneously different video programs. For that purpose, technologies such as DVB-H/SH - for Digital Video Broadcasting/Satellite Handheld, Wi-MAX - for Worldwide Interoperability for Microwave Access - or MBMS - for Multimedia Broadcast Multicast Service - can be implemented.

More precisely, such technologies can compress, multiplex and/or transmit the video programs through an allocated part of a channel bit rate.

Typically, video programs are transmitted by groups of successive pictures (GOP) as, for instance in a MPEG - for Moving Picture Expert Group- coded video program or stream.

Following this example, each MPEG-coded video program consists of successive GOPs containing generally the following picture types:

- I-picture or I-frame (intra coded picture) reference picture, which represents a fixed image and which is independent of other picture types. Each GOP begins with an I-picture.
- P-picture or P-frame (predictive coded picture) contains motion-compensated difference information from the preceding I- or P-frame.
- B-picture or B-frame (bidirectional predictive coded picture) contains difference information from the preceding and following I- or P-frame within a GOP.

The bit rate allocations for the video programs might be constant, thereafter called "Constant Bit Rate encoding method" or "CBR". Nevertheless it is known that, to obtain a relatively constant video quality on an encoded video program, bit rate allocation must vary accordingly to the amount of information to be encoded.

When considering the MPEG pictures previously described, it appears that I-pictures require a larger amount of information as compared to P-pictures or B-pictures. In order to display continuously a video program encoded with such I, P and B pictures, the associated bit rate should therefore be increased when I-pictures are transmitted so that their quality of encoding is similar to the quality of P-pictures or B-pictures encoding.

A video program requiring a large number of such bit rate variations - for instance because it codes different scenes requiring many I-frames - is called thereafter a complex video program or a complex image.

To deal with bit rate variations, a Variable Bit Rate (VBR) compression method has been developed which dynamically allocates part of the channel bandwidth to the video programs. In the VBR method, a control mechanism called statistical multiplexing might be implemented in order to modify the bit rate allocated to one video program accordingly to the amount of information to be transmitted for the images of such video program.

Basically, the variation of the bit rate allocation is obtained by controlling the quantization parameter of the encoding process in such a way that the more complex images are allocated more bits than the less complex images.

Disappointingly the quality of the pictures, for instance as measured by their Peak Signal-to-Noise Ratio (PSNR), might vary strongly within the same video program if the video programs have unsmoothed complex contents and present multiple scene changes.

In this case, the video images displayed by the receiver of the video program presents visual artifacts due to its quality contrast between images, such visual artifacts being detrimental to the quality perceived by the end user of the video program.

To modify progressively the quantization parameter of a video program in order to obtain an acceptable smoothness, the encoding might take into consideration the quality of currently and previously transmitted frames, as described, for instance, by J. Lin and A. Ortega in their article called "Bit-rate control using piecewise approximated rate-distortion characteristics," IEEE Trans. Circuits Syst. Video Technol, vol. 8, pp. 446-459, 1998).

Nevertheless, such known methods lead to significant variations of quality in the transmitted video program so that unsatisfactory visual artifacts might still be perceived by the end user of the video program.

The invention aims to solve this problem. It results from the finding that the control of a video content smoothness to be transmitted with other video programs on a transmission channel broadcasting must be performed considering, on the one hand, relevant smoothness measures relating to each video program and, on the other hand, relevant quality standards relating to all the video programs to be transmitted.

The invention also results from the finding that such a relevant smoothness measure requires considering a quality evolution both between past and/or current transmitted images as well as between future images - to be transmitted - of the video content.

Thus the invention concerns a method for allocating bit rates to video programs broadcasted as groups of pictures through a transmission channel having a constant transmission rate, each video program being encoded through at least one encoding parameter depending on a first smoothness measure representative of quality variations between pictures currently and/previously transmitted within said video program, **characterized in that** the encoding parameter also depends on:

- A second smoothness measure representative of quality variations between future pictures to be transmitted thereafter in the same video program, and
- At least one quality standard ensuring an encoding quality for any broadcasted video program, transmitted through the channel, above a determined absolute and/or relative quality threshold.

On the one hand, this method allows improving the smoothness of an encoded video content since an encoding parameter, typically the quantization parameter Qp, relies on the smoothness of both past and/or currently transmitted frames but also of future frames to be transmitted thereafter.

Despite such improve smoothness, the method according to the invention allows the allocation of a higher bit rate to a video program when its content becomes more complex in order to guarantee a fair quality distribution between multiplexed programs.

For that purpose, on the other hand, such bit rate increase is balanced with at least one quality threshold, absolute or relative, which is imposed for all transmitted video programs so that a compromise is achieved between bit rate variations, due to each video program complexity variation, and fair channel resources allocation between all the video programs.

To conclude with, it must be underlined that such balance might optimize the use of a channel bandwidth in such a way that the number of video programs transmitted therein might be increased, as explained thereafter.

In one embodiment, the groups of pictures are divided in sets of pictures, both the number of pictures within a set of pictures and the number of sets within a group of pictures are identical for the broadcasted video programs.

In this case, each set of pictures might contain a number of pictures ranging from 1 to the number of frames within a group of pictures.

In one embodiment, the first smoothness measure, the second smoothness measure and the quality threshold are determined for a number of sets of pictures comprise between 1 and the number of sets of pictures comprise in a group of pictures.

In one embodiment, the quality of a broadcasted video program corresponds to a distortion measure of at least one set of picture while the quality threshold is an absolute distortion value.

For instance, such distortion is measured, for the j-th SOP in the i-th program, as an average distortion denoted $D_{i,j}$ obtained from a corresponding Peak Signal-to-Noise Ratio ($P_{i,j}$) according to an equation such as:

$$P_{ij} = 10\log_{10}\left(\frac{n^2}{D_{ij}}\right)$$

Wherein n is a parameter relating to a technical feature of the transmitted images.

In one embodiment, the quality of a broadcasted video program is a measure of its Peak Signal-to-Noise Ratio ($P_{i,j}$) while the relative quality threshold is a relative distortion threshold ($\Delta Pp$).

For instance, such relative distortion threshold ($\Delta Pp$) is defined, when considering N video programs, according to an equation such as:

$$\left|P_{ij} - \frac{1}{N}\sum_{i=1}^{N} P_{ij}\right| \leq \Delta P_p$$

Wherein N is the number of video programs transmitted by the channel.

In one embodiment, the encoding parameter is a quantization parameter.

In one embodiment, the first smoothness measure and the second smoothness measure, for the j-th SOP in the i-th program, are performed according to respective equations such as:

$$\left|P_{ij} - P_{i(j-1)}\right| \leq \Delta P_s$$

or

$$\left| P_{i(j+k)} - P_{i(j+k-1)} \right| \le \Delta P_s$$

Wherein k is comprised between 2 and 4 and ΔPs is a smoothness constraint.

The invention also relates to a controller for allocating bit rates to video programs broadcasted as groups of pictures through a transmission channel having a constant transmission rate, each video program being encoded through at least one encoding parameter depending on a first smoothness measure representative of quality variations between pictures currently and/ previously transmitted within said video program, **characterized in that** the controller also comprises:

- Means for measuring a second smoothness measure representative of quality variations between future pictures to be transmitted thereafter in the same video program, and
- Means for ensuring at least one quality standard in encoding for any broadcasted video program above a determined absolute and/or relative quality threshold,

In order to perform a method accordingly to any of the previous claims.

In one embodiment wherein, the groups of pictures being divided in sets of pictures, the controller comprises means to determine the first smoothness measure, the second smoothness measure and the quality threshold for a number of sets of pictures comprise between 1 and the number of sets of pictures comprise in a group of pictures.

Finally, the invention relates to an encoder for treating and multiplexing video programs broadcasted as groups of pictures through a transmission channel having a constant transmission rate, each video program being encoded through at least one encoding parameter depending on a first smoothness measure representative of quality variations between pictures currently and/ previously transmitted within said video program, characterized in that the encoder comprises means to consider an encoding parameter also depending on:

- A second smoothness measure representative of quality variations between future pictures to be transmitted thereafter in the same video program, and
- At least one quality standard ensuring an encoding quality for any broadcasted video program being above a determined absolute and/or relative quality threshold following a method according to any of the previous embodiments.

The foregoing aspects and many of the attendant advantages of this invention will become more readily appreciated as the same becomes better understood by reference to the following detailed description when taking in conjunction with the accompanying drawings which represent:

- In figure 1, a functional representation of a broadcast/multicast system implementing the invention,
- In figure 2, a video stream encoded according to the invention, and
- In figures 3, 4, 5 and 6, different measures of video streams parameters underlying the advantages of implementing the invention.

As represented on drawing 1, a typical broadcast/multicast system 10 presents N video sources $12_1$, $12_2$, ...and $12_N$ in parallel which deliver respectively video programs $14_1$, $14_2$, ...or $14_N$. Each video program $14_1$, $14_2$,... or $14_N$ is encoded by an encoder $16_1$, $16_2$, ...or $16_N$ controlled accordingly to the invention.

For that purpose, each encoder $16_1$, $16_2$, ... or $16_N$ receives encoding parameters 17, from a controller 18, which depend at least on:

- A first smoothness measure representative of quality variations between pictures previously transmitted within said video program,
- A second smoothness measure representative of quality variations between pictures to be transmitted thereafter in the same video program, and
- At least one quality standard preventing an encoding quality for any broadcasted video program being below a determined quality threshold.

Thereafter, the encoded signal $R_1$, $R_2$, ...or $R_N$ delivered by each encoder $16_1$, $16_2$, ...or $16_N$ can be multiplexed - step 18 - and transmitted over a channel 19 presenting a constant transmission rate Rc.

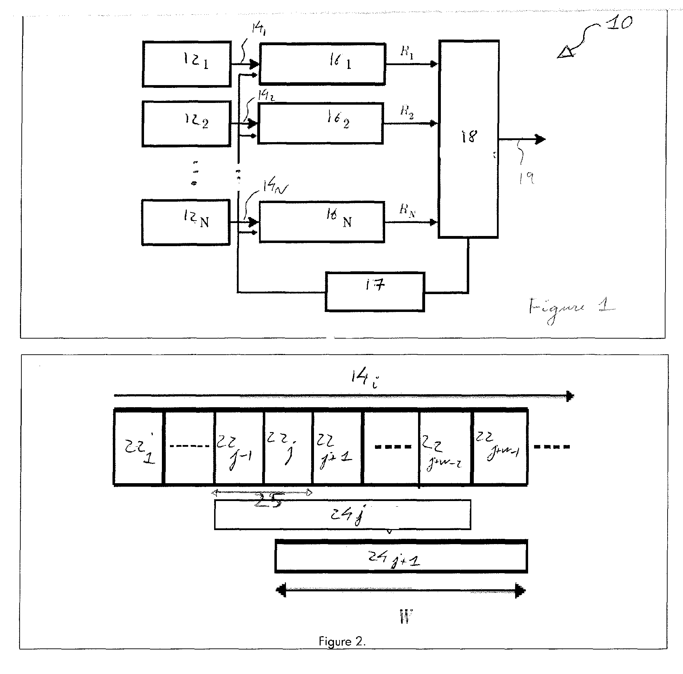

In this embodiment, each video program is composed by groups of pictures - GOP 25 - which comprises $N_G$ pictures, each GOP 25 being partitioned into several sets of pictures - SOP - $22_j$ as represented in figure 2.

The number of pictures $N_s$ into a SOP is constant and identical for all the video programs $14_1$, $14_2$ ...and $14_N$.

In this embodiment, such number ranges from 1 to $N_G$ while the beginning of each SOP is assumed not to be synchronized for the N video programs $14_1$, $14_2$, ...or $14_N$ to better allocate the bit rate between video programs.

To describe precisely this embodiment, an encoding rate or an average distortion of the j-th SOP in the i-th program are denoted, respectively, by $R_{i,j}$ or $D_{i,j}$.

Such average distortion $D_{i,j}$ is based on a quadratic distortion measure relying on a corresponding Peak Signal-to-Noise Ratio (PSNR) through an equation as (1):

$$P_{ij} = 10\log_{10}\left(\tfrac{n^2}{D_{ij}}\right) \quad (1)$$

Wherein n is a parameter to be adjusted in accordance with technical features of the images. For instance, n might be equal to 255 when considering different grey levels or intensities used in the images.

For each SOP, $D_{i,j}$ and $R_{i,j}$ are also determined by several encoding parameters - size of blocks, accuracy of a motion compensation - among which the average quantization parameter $Q_{i,j}$ can be considered the most important.

To simplify this embodiment, the encoding parameter considered to implement the invention is such quantization parameter $Q_{i,j}$ usually denoted QP or $Q_P$ in the standard ITU, H.264: Advanced video coding for generic audiovisual services, of November 2007.

Assuming that a rate-distortion optimization is performed for the encoding of each SOP, their distortion $D_{i,j}$ and their bit rate $R_{i,j}$ may be represented as two functions (2) and (3) of $Q_{i,j}$ j. More precisely:

$$D_{ij} = h_{ij}\left(Q_{ij}\right) \quad (2)$$

and

$$R_{ij} = g_{ij}\left(Q_{ij}\right) \quad (3)$$

Wherein, for instance:

$$D_{ij} = a_D \exp\left(b_D Q_p\right) \quad (2)$$

and

$$R_{ij} = a_R \exp\left(-b_R Q_p\right) \quad (3)$$

Considering that $a_D$, $b_D$, $a_R$ and $b_R$ can be derived from experimental measures.

The interest of using SOPs measures appears at this point since they makes it possible to locally adjust the granularity at which rate and quality control is performed during multiplexing.

In other words, considering SOPs of more than one picture facilitates the smoothness control by reducing the bit rate variations between consecutive pictures within the SOP;

On the basis of the previously defined parameters, a statistical multiplexing according to the invention can be performed in order to respect at least one of the following criteria, detailed thereafter, when considering a channel transmitting N video programs:

   1) A low quality decrease for the channel when globally considering the video programs (cost function),
   2) A respect of the communication channel limited bit rate (rate distortion constraint),

3) An absolute quality for all the video programs (maximum distortion constraint) so that their distortion is below a maximum distortion threshold,

4) A relative quality for all the video programs (fairness constraint) so that the channel resources are fairly distributed, and

5) Smooth variations for each video content.

1- Cost function:

A quality increase for a given video program might lead to a quality decrease for at least another program in the channel transmission. To minimize the average distortion of all SOPs simultaneously transmitted, a cost parameter $D_j(Q_{1,J}, Q_{2,J}, ... Q_{N,J})$ is defined as:

$$D_j(Q_{1j}, Q_{2j}..Q_{Nj}) = \tfrac{1}{N}\sum_{i=1}^{N} D_{ij}(Q_{ij}) \quad (4)$$

Such cost parameter is representative of the global distortion underlying the video programs encoding so that its reduction appears as a global advantage for the broadcasting system.

2- Rate distortion constraint:

The constraint on the total rate $R_{c,j}$ of the channel is considered SOP by SOP. The constraint to be satisfied when transmitting the j-th SOP is:

$$\sum_{i=1}^{N} R_{ij}(Q_{ij}) \le R_c, j = 1,2,... \quad (5)$$

3- Maximum distortion constraints

To keep an acceptable visual quality, the distortion within a SOP has to be limited by a maximum tolerated distortion $D_{Max}$ Thus, all the programs must satisfy this condition:

$$D_{ij}(Q_{ij}) \le D_{max} \quad (6)$$

Wherein Dmax is a maximum accepted level of distortion.

4- Fairness constraint

Inter-program fairness means that the transmitted programs have broadly the same quality level. This quality is evaluated at a SOP level using the PSNR, for example. The fairness constraint may be translated into the following inequality

$$\left| P_{ij}(Q_{ij}) - \tfrac{1}{N}\sum_{i=1}^{N} P_{ij} \right| \le \Delta P_p \quad (7)$$

Equation (7) allows a PSNR difference for a given program with the average PSNR of the programs transmitted in the channel of at most ΔPp.

5- Smoothness constraint

Each program should present smooth quality variations since large PSNR variations between pictures may be visually annoying as previously explained. Considering only past SOP may lead to situations in which smoothness and total rate constraints become incompatible. Performing predictive control, i.e., taking future SOP into account facilitates the anticipation of future variations of the PSNR, due, e.g., to scene change.

In this embodiment, SOPs are structured so that in each GOP 25 (figure 2) there is one SOP with an I-picture and P-pictures (IPP..) while other SOPs only present P-pictures (PP..).

Also, the transmission of SOPs does not need synchronization between broadcasted signals so that a similar number of SOPs containing I-pictures each time can be transmitted.

Control 24j is thus performed at a SOP level, taking into account the PSNR of the past SOP and that of (W - 2) future SOP, W being a parameter to determine in order to fix 24j control.

Indeed, a maximum variation $\Delta P_s$ of the PSNR between two consecutive SOPs is ensured within W successive SOPs.

In other words, the smoothness constraint when evaluating Qj = (Q1j,Q2j , ... ,QNj) may be formulated as

$$\left| P_{ij}(Q_{ij}) - P_{i(j-1)}(\hat{Q}_{i(j-1)}) \right| \le \Delta P_s \quad (8)$$

*and*

$$\left| P_{i(j+k)}(Q_{i(j+k)}) - P_{i(j+k-1)}(Q_{i(j+k-1)}) \right| \le \Delta P_s$$

for k = 1, ... ,W - 1 - control within W successive SOPS - and i = 1, . ..,N - control simultenously for the N video content.

$\hat{Q}_{i(j-1)}$, i = 1, ... ,N has been obtained during the control of the j - 1-th SOP. These variables are useful to ensure that the choice made for Qj will be compatible with a satisfaction of the smoothness constraints for at least W - 2 future SOP.

In this embodiment, considering the initial cost function and all constraints into account leads to the following constrained optimization problem for the quality control of the j-th SOP

$$\hat{Q}_j = \arg \min_{Q_j} \sum_{i=1}^{N} D_{ij}(Q_{ij})$$

Wherein "argming" is a function identifying a $\hat{Q}_j$ value which minimizes the expression $\sum_{i=1}^{N} D_{ij}(Q_{ij})$ subject to:

$$\left\{ \begin{array}{l} \sum_{i=1}^{N} R_{ij}(Q_{ij}) \le Rc \\ D_{ij}(Q_{ij}) \le D_{\max} \\ \left| P_{ij}(Q_{ij}) - P_j \right| \le \Delta P_p \\ \left| P_{ij}(Q_{ij}) - P_{i(j-1)}(\hat{Q}_{i(j-1)}) \right| \le \Delta P_s \\ \left| P_{i(j+k)}(Q_{i(j+k)}) - P_{i(j+k-1)}(Q_{i(j+k-1)}) \right| \le \Delta P_s \end{array} \right.$$

for k = 1, ... ,W - 1 and i = 1, ... ,N

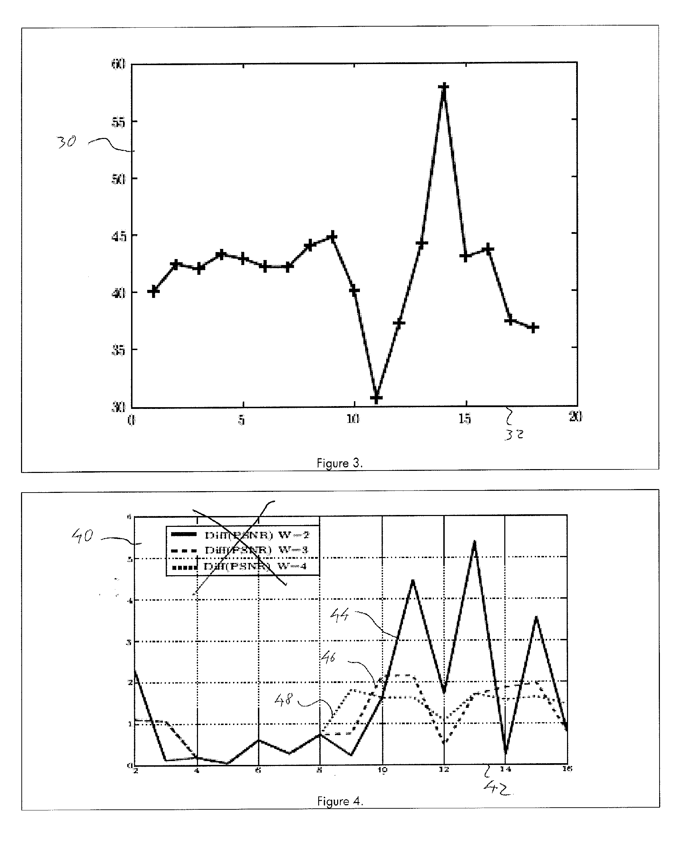

When considering a video stream encoded according to the prior art i.e. alone at a constant target bit rate of 200 Kbit/s (figure 3), the variation of its measured PSNR (axis 30, in dB) as a function of the SOP index (axis 32) reaches 10 dB between successive SOPs 10 and 11.

In figure 4, the invention is implemented with the multiplexing of two video sequences: Foreman and Film, the window W varying for each curve whereas the fairness constraint ΔPp is constantly set to 4 dB.

Figure 4 illustrates ΔPs measures (axis 40) between successive SOP of Film sequence (axis 42 represents the SOPs' index) wherein the window W of control varies between 2 (44), 3 (46), and 4 (48).

In other words, the smoothness constraint is established with respect to present frames, to one or to two future SOP respectively. In this experiment, a minimum ΔPs is searched such that all constraints remain satisfied.

For W = 2, ΔPs has to be larger than 5.4 dB whereas with W = 3 and W = 4, it may be reduced to 2.2 dB and 1.8 dB respectively for the different multiplexed programs at a constant target bit rate.

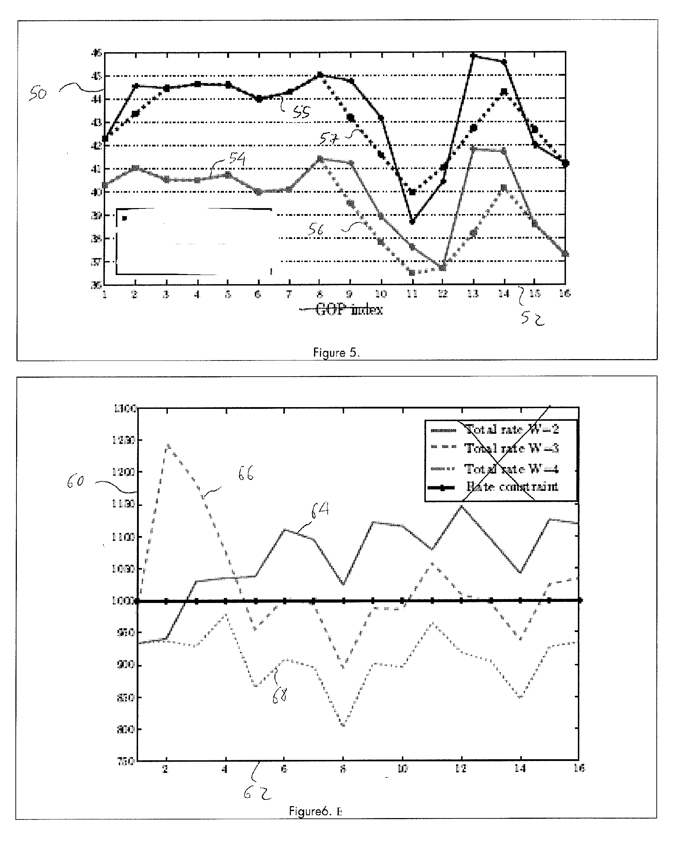

Figure 5 focuses on the fairness and smoothness criteria, representing the evolution of the PSNR (axis 50, in dB) for the two previously multiplexed sequences (Foreman: 54 and 56; Film: 55, 57), with the parameters defined above i.e. for W = 2 (54, 55) and W = 4 (56, 57), the axis 52 representing the SOPs' index.

In order to satisfy the targets constraints, we use the lowest ΔPs so that we ensure the best smoothness result. It appears that we can use lower ΔPs with a broader window (W=4) than a narrower (W=2). Also, it appears that a statistical multiplexing and efficient control allows the smoothness and fairness criteria to be satisfied simultaneously while increasing W allows anticipating the PSNR variations by reducing or increasing in advance the PSNR to better account for a large PSNR variation which would occur when encoding a program with CBR.

Lastly, four video sequences (Foreman, Container, Coastguard, Hall) are multiplexed. The rate on the channel is Rc = 1 Mbit/s while the fairness and smoothness constraints are controlled by ΔPp = 4 dB and ΔPs = 1 dB.

Figure 6 represents the evolution of the total rate (axis 60) of a channel transmitting the multiplex signal as a function of the SOP index (axis 62). When all constraints may not be satisfied, the rate constraint is relaxed and the rate is minimized so that all other constraints can be satisfied.

The control is performed over a window characterized by W = 2 (64), 3 (66), and 4(68). Only W = 4 allows to satisfy all constraints simultaneously which shows that increasing the size of the control windows improves the efficiency of the statistical multiplexing until such value of W=4. Further tests have shown that an increasing value does not provide a relevant improvement.

Figure 6 shows that multiplexing the four test sequences and satisfying all constraints is not possible by performing a smoothness regulation accounting only for the past (64 and 66) whereas taking into consideration images to be sent - as in the invention - allows satisfying to all constraints.

**Claims**

1. Method for allocating bit rates to video programs ($14_1$, $14_2$, ...$14_N$) broadcasted as groups of pictures (25) through a transmission channel (19) having a constant transmission rate, each video program (14i) being encoded through at least one encoding parameter ($Q_{i,j}$) depending on a first smoothness measure representative of quality variations between pictures currently and/ previously transmitted within said video program (14i), **characterized in that** the encoding parameter ($Q_{i,j}$) also depends on:

   - A second smoothness measure representative of quality variations between future pictures to be transmitted thereafter in the same video program, and
   - At least one quality standard ensuring an encoding quality for any broadcasted video program, transmitted through the channel, above a determined absolute ($D_{Max}$) and/or relative (ΔPp) quality threshold.

2. Method according to claim 1 wherein the groups of pictures (25) are divided in sets of pictures (22j), both the number of pictures ($N_S$) within a set of pictures (22j) and the number of sets within a group of pictures (25) are identical for the broadcasted video programs.

3. Method according to claim 2 wherein each set of pictures (22j) contains a number of pictures ranging from 1 to the number of frames within a group of pictures ($N_G$).

4. Method according to claim 2 or 3 wherein the first smoothness measure, the second smoothness measure and the quality threshold are determined for a number of sets of pictures (22j) comprised between 1 and the number of sets of pictures (22j) comprised in a group of pictures (25).

5. Method according to claim 2, 3 or 4 wherein the quality of a broadcasted video program corresponds to a distortion measure ($D_{i,j}$) of at least one set of picture (22j) while the quality threshold is a distortion value ($D_{Max}$).

6. Method according to claim 5 wherein the distortion is measured, for the j-th SOP in the i-th program, as an average distortion denoted $D_{i,j}$ obtained from a corresponding Peak Signal-to-Noise Ratio ($P_{i,j}$) according to an equation such as:

$$P_{ij} = 10\log_{10}\left(\frac{n^2}{D_{ij}}\right)$$

Wherein n is a parameter relating to a technical feature of the transmitted images.

7. Method according to any of the previous claims wherein the quality of a broadcasted video program (14i) is a measure of its Peak Signal-to-Noise Ratio ($P_{i,j}$) while the quality threshold is a relative distortion threshold ($\Delta Pp$).

8. Method according to claim 7 wherein the relative distortion threshold $\Delta Pp$ is defined, for the j-th SOP in the i-th program, according to an equation such as:

$$\left| P_{ij} - \frac{1}{N}\sum_{i=1}^{N} P_{ij} \right| \leq \Delta P_p$$

Wherein N is the number of video programs transmitted by the channel (19).

9. Method according to any of the previous claims wherein the encoding parameter is a quantization parameter ($Q_{i,j}$).

10. Method according to any of the previous claims wherein the first smoothness measure and the second smoothness measure, for the j-th SOP in the i-th program, are performed according to respective equations such as:

$$\left| P_{ij} - P_{i(j-1)} \right| \leq \Delta P_s$$

or

$$\left| P_{i(j+k)} - P_{i(j+k-1)} \right| \leq \Delta P_s$$

Wherein k is comprised between 2 and 4 and $\Delta Ps$ is a smoothness constraint.

11. Controller (18) for allocating bit rates to video programs ($14_1$, $14_2$, ...$14_N$) broadcasted as groups of pictures (25) through a transmission channel (19) having a constant transmission rate, each video program ($14_i$) being encoded through at least one encoding parameter ($Q_{i,j}$) depending on a first smoothness measure representative of quality variations between pictures currently and/ previously transmitted within said video program ($14_i$), **characterized in that** the controller (18) also comprises means for:

- Measuring a second smoothness measure representative of quality variations between future pictures to be transmitted thereafter in the same video program, and
- Ensuring at least one quality standard in encoding for any broadcasted video program above a determined absolute and/or relative quality threshold,

In order to perform a method accordingly to any of the previous claims.

12. Controller (18) according to claim 11 wherein, the groups of pictures (25) being divided in sets of pictures (22j), it comprises means to determine the first smoothness measure, the second smoothness measure and the quality threshold for a number of sets of pictures (22j) comprised between 1 and the number of sets of pictures (22j) comprise in a group of pictures (25).

13. Encoder ($16_1$, $16_2$, ...$16_N$) for treating and multiplexing video programs ($14_1$, $14_2$, ...$14_N$) broadcasted as groups of pictures (25) through a transmission channel (19) having a constant transmission rate, each video program (14i) being encoded through at least one encoding parameter ($Q_{i,j}$) depending on a first smoothness measure representative of quality variations between pictures currently and/ previously transmitted within said video program (14i), **characterized in that** the encoder ($16_1$, $16_2$, ...$16_N$) comprises means to consider an encoding parameter also depending on:

   - A second smoothness measure representative of quality variations between future pictures to be transmitted thereafter in the same video program (14i), and
   - At least one quality standard ensuring an encoding quality for any broadcasted video program ($14_1$, $14_2$, ... $14_N$) above a determined absolute and/or relative quality threshold

Following a method according to any of the claims 1 to 10.

Figure 1

Figure 2.

Figure 3.

Figure 4.

Figure 5.

Figure6. E

Europäisches
Patentamt

European
Patent Office

Office européen
des brevets

**EUROPEAN SEARCH REPORT**

Application Number

EP 09 30 5287

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HE Z ET AL: "Linear Rate Control and Optimum Statistical Multiplexing for H.264 Video Broadcast" IEEE TRANSACTIONS ON MULTIMEDIA, IEEE SERVICE CENTER, PISCATAWAY, NJ, US, vol. 10, no. 7, 1 November 2008 (2008-11-01), pages 1237-1249, XP011237731 ISSN: 1520-9210 * abstract * * section I.B * * section III, first paragraph * * section IV.A and IV.D * * figures 1,2,8-17 * ----- | 1-13 | INV. H04N7/24 H04N7/58 H04N7/26 |
| X | TAGLIASACCHI M ET AL: "Minimum Variance Optimal Rate Allocation for Multiplexed H.264/AVC Bitstreams" IEEE TRANSACTIONS ON IMAGE PROCESSING, IEEE SERVICE CENTER, PISCATAWAY, NJ, US, vol. 15, no. 7, 1 July 2008 (2008-07-01), pages 1129-1143, XP011227465 ISSN: 1057-7149 * abstract * * section III.B * * section IV * * section V * * figures 1,8-11 * * tables I,II * -----  -/-- | 1-13 | TECHNICAL FIELDS SEARCHED (IPC)  H04N |

The present search report has been drawn up for all claims

| Place of search | Date of completion of the search | Examiner |
|---|---|---|
| The Hague | 10 September 2009 | Arpaci, Mutlu |

EPO FORM 1503 03.82 (P04C01)

Europäisches
Patentamt

European
Patent Office

Office européen
des brevets

## EUROPEAN SEARCH REPORT

Application Number

EP 09 30 5287

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LILLA BÖRÖCZKYBOROCZKY ET AL: "Joint Rate Control with Look-Ahead for Multi-Program Video Coding" IEEE TRANSACTIONS ON CIRCUITS AND SYSTEMS FOR VIDEO TECHNOLOGY, IEEE SERVICE CENTER, PISCATAWAY, NJ, US, vol. 10, no. 7, 1 October 2000 (2000-10-01), XP011014108 ISSN: 1051-8215 * abstract * * section III * * figure 1 * ----- | 1-13 | |
| A | REZAEI M ET AL: "Joint Video Coding and Statistical Multiplexing for Broadcasting Over DVB-H Channels" IEEE TRANSACTIONS ON MULTIMEDIA, IEEE SERVICE CENTER, PISCATAWAY, NJ, US, vol. 10, no. 8, 1 December 2008 (2008-12-01), pages 1455-1464, XP011238007 ISSN: 1520-9210 * section IV.D * * section V * * figures 2,5 * * table IV * ----- | 1-13 | TECHNICAL FIELDS SEARCHED (IPC) |
| A | PAULO NUNES ET AL: "Joint Bit-Allocation for Multi-Sequence H.264/AVC Video Coding Rate Control (Abstract)" 26. PICTURE CODING SYMPOSIUM;7-11-2007 - 9-11-2007; LISBON,, 7 November 2007 (2007-11-07), XP030080428 * sections 4 and 5 * * figure 1 * * table 1 * ----- -/-- | 1-13 | |

The present search report has been drawn up for all claims

| Place of search | Date of completion of the search | Examiner |
|---|---|---|
| The Hague | 10 September 2009 | Arpaci, Mutlu |

EPO FORM 1503 03.82 (P04C01)

Europäisches
Patentamt

European
Patent Office

Office européen
des brevets

**EUROPEAN SEARCH REPORT**

Application Number

EP 09 30 5287

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DATABASE COMPENDEX [Online] ENGINEERING INFORMATION, INC., NEW YORK, NY, US; 28 May 2000 (2000-05-28), SORIAL HANI ET AL: "Joint bit-allocation for MPEG encoding of multiple video sequences with minimum quality-variation" XP002545100 Database accession no. E2000465353229 * abstract * & PROCEEDINGS - IEEE INTERNATIONAL SYMPOSIUM ON CIRCUITS AND SYSTEMS 2000 IEEE, vol. 2, 2000, pages II-9, ----- | 1-13 | |
| | | | TECHNICAL FIELDS SEARCHED (IPC) |

The present search report has been drawn up for all claims

| Place of search | Date of completion of the search | Examiner |
|---|---|---|
| The Hague | 10 September 2009 | Arpaci, Mutlu |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. Lin ; A. Ortega.** Bit-rate control using piecewise approximated rate-distortion characteristics. *IEEE Trans. Circuits Syst. Video Technol,* 1998, vol. 8, 446-459